# NEUE EUROPÄISCHE PATENTSCHRIFT

(11) **EP 0 437 266 B2**
(45) Veröffentlichungstag und Bekanntmachung des Hinweises auf die Entscheidung über den Einspruch: **03.09.2008**
(45) Hinweis auf die Patenterteilung: 20.11.1996
(21) Anmeldenummer: 91100275.6
(22) Anmeldetag: 10.01.1991
(51) Int. Cl.: B60L 11/16

(54) **Kraftfahrzeug mit Verbrennungsmotor, Stromgenerator, Schwungradspeicher und Antriebselektromotor**
Vehicle with internal combustion engine, current generator, flywheel storage and electric drive motor
Véhicule avec moteur à combustion interne, générateur de courant, stockage à volant et moteur d'entraînement électrique

(30) Priorität: 11.01.1990 DE 4000678
(43) Veröffentlichungstag der Anmeldung: 17.07.1991
(73) Patentinhaber: MAGNET-MOTOR GESELLSCHAFT FÜR MAGNETMOTORISCHE TECHNIK MBH, 82319 Starnberg (DE)
(72) Erfinder: Heidelberg, Götz, Dipl.-Phys., W-8136 Starnberg-Percha (DE); Gründl, Andreas, Dr., W-8000 München 70 (DE); Ehrhart, Peter, Dr., W-8000 München 70 (DE); Reiner, Gerhard, Dr., W-8121 Pähl (DE)
(74) Vertreter: Klunker . Schmitt-Nilson . Hirsch

(56) Entgegenhaltungen:
- WO-A1-82/00117
- DE-A1- 2 012 384
- DE-A1- 3 050 625
- DE-A1- 3 243 515
- DE-A1- 3 620 362
- DE-C- 1 613 926
- US-A- 3 791 473
- US-A- 4 065 702
- US-A- 4 407 132
- US-A- 4 482 813
- US-A- 4 495 451
- US-A- 4 688 872
- ATZ AUTOMOBILTECHNISCHE ZEITSCHRIFT Bd. 81, Nr. 6, 1979, DE Seiten 283 - 289; C. BADER: 'Elektrische und hybride Antriebe für Nutzfahrzeuge'
- P. JAHN "Der elektrische Antrieb bei Dieseltriebwagen - Technik, Realisationen, Weiterentwicklung"; Eisenbahntechnik, Österreichische Fachzeitschrift für modernen Eisenbahnbau, 3/1983; Seiten 4 - 13
- GERIGK, BRUHN, DANNER, ENDRUSCHAT, GöBERT, GROSS, KOMOLL: 'Kraftfahrzeugtechnik', 1994, WESTERMANN Seite 293

## Beschreibung

Die Erfindung bezieht sich auf ein Kraftfahrzeug, das
- einen Verbrennungsmotor, der eine mittlere Antriebsleistung für das Kraftfahrzeug liefert,
- einen von dem Verbrennungsmotor antreibbaren Generator zur Stromerzeugung,
- und einen elektrisch ladbaren und entladbaren Schwungrad-Speicher aufweist,
- wobei der allein elektomotorisch aus gebildete Fahrzeugantrieb mindestens einen Elektromotor aufweist,
- und wobei der Generator, der Speicher und der Elektromotor elektrisch miteinander verbunden sind und dem Speicher die Leistungsdifferenz zwischen dem Generator und dem Elektromotor zugeführt bzw. entnommen wird.

Ein Kraftfahrzeug dieser Art ist aus US-A-4 495 451 bekannt. Hier wird aufgrund einer Information über die Ladesituation des Speichers der Verbrennungsmotor entweder gestartet oder gestoppt.

Aus der österreichischen Zeitschrift "ebt Eisenbahntechnik" 3, 1983, Seiten 4 bis 13, ist einen Schienentriebwagen mit dieselelektrischem Antrieb bekannt. Die jeweils gewünschte Leistungsstufe wird auf einer linearen Belastungskennlinie, die Leistung und Drehzahl einander zuordnet und im Bereich des geringsten Brennstoffverbrauchs liegt, gewählt. Ein Schwungrad-speicher ist nicht vorhanden.

Kraftfahrzeuge dieser Art zeichnen sich dadurch aus, daß sie in der Regel ohne Schaltgetriebe gebaut werden können, weil der Generator und der Elektromotor im Zusammenwirken einen Drehzahl/Drehmoment-Wandler darstellen, und daß sie mit einem Verbrennungsmotor ausgestattet sein können, der für den zeitlich gemittelten Leistungsbedarfs des Fahrzeugs ausreicht bzw. kleiner als für die (kurzzeitige) Maximalantriebsleistung erforderlich dimensioniert ist, weil Antriebsleistungsbedarf, der über einen mittleren Leistungsbereich hinausgeht, aus dem Speicher gedeckt werden kann. Kleinere Verbrennungsmotoren, die in einem relativ engen Leistungsbereich laufen, sind insbesondere unter dem Gesichtspunkt des Kraftstoffverbrauchs wirtschaftlicher als größere Verbrennungsmotoren.

Aus DE 36 20 362 A1 ist ein Kraftfahrzeug mit zwei Verbrennungsmotor/Generator-Einheiten und allein elektromotorischem Antrieb bekannt. Zur Leistungsänderung kann eine der zwei Verbrennungsmotor/Generator-Einheiten zugeschaltet werden.

Außerdem ist aus DE 20 12 384 A ein Parallelhybrid-Kraftfahrzeug bekannt. Bei diesem bekannten Kraftfahrzeug besteht über ein Planetengetriebe eine mechanische Antriebsverbindung zwischen dem Verbrennungsmotor und einem Antriebsrad des Kraftfahrzeugs. Parallel zu der mechanisch übertragenen Antriebsleistung von dem Verbrennungsmotor kann dem Antriebsrad Antriebsleistung von einem Elektromotor zugeführt werden. Ferner sind ein von dem Verbrennungsmotor angetriebener Generator und eine chemische Batterie zur Speicherung elektrischer Energie vorhanden. Der Generator, die Batterie und der Elektromotor sind elektrisch miteinander verbunden; die Leistungsdifferenz zwischen dem Generator und dem Elektromotor wird der Batterie zugeführt, bzw. entnommen. In einer beschriebenen, ersten Betriebsart (typischerweise Stadtverkehr unterhalb eines Tempolimits) wird der Verbrennungsmotor mit quasikonstanter Drehzahl und quasikonstantem Drehmoment bei hohem Wirkungsgrad betrieben. Zum Ändern der Drehzahl des Antriebsrads wird mittels variabler Bremsung des Planetenradträgers des Planetengetriebes das Übersetzungsverhältnis des Planetengetriebes geändert.

Wenn bei dem aus DE 20 12 384 A bekannten Fahrzeug durch einen Fühler für den Ladezustand der Batterie, ggf. zusätzlich durch einen Fühler für die durchschnittlich an dem Antriebsrad umgesetzte Leistung, festgestellt wird, daß eine anpassende Änderung der Abgabeleistung des Verbrennungsmotors geboten ist, wird ein Drosselbetätigungselement des Verbrennungsmotors verstellt. DE 20 12 384 A enthält keine Lehre darüber, daß bei dieser Änderung der Abgabeleistung des Verbrennungsmotors der Gesichtspunkt des Abstands von dem verbrauchsoptimalen Abgabeleistungspunkt oder der Gesichtspunkt der für die betreffende Verbrennungsmotorleistung hinsichtlich Kraftstoffverbrauch und/oder hinsichtlich Schadstoffemission möglichst günstigen Drehzahl/Drehmoment-Kombination berücksichtigt werden soll.

Schließlich ist es bekannt (DE 30 50 625 A1), ein Hybrid-Kraftfahrzeug im Betriebspunkt des optimal niedrigen Kraftstoffverbrauchs zu betreiben.

Bei Kraftfahrzeugen der eingangs genannten Art stellt sich das Problem einer möglichst günstigen Steuerung der enthaltenen Aggregate, nämlich Verbrennungsmotor, Generator, Speicher und Elektromotor, insbesondere im Verhältnis zueinander bei unterschiedlichen Antriebsleistungsanforderungen. Die erforderliche Steuerung des Elektromotors ist dadurch grundsätzlich festgelegt, daß sie den Elektromotor auf die jeweils momentan gewünschten Leistung, beispielsweise für Fahrt des Kraftfahrzeugs mit höherer oder niedrigerer Geschwindigkeit oder für Beschleunigung des Kraftfahrzeugs, steuern muß. Für Steuerungseinflußmaßnahmen offen sind jedoch die restlichen Aggregate, nämlich Verbrennungsmotor, Generator und Speicher, angesichts der realen Verhältnisse, daß die von dem Elektromotor zu liefernde Antriebsleistung nicht über die Zeit konstant ist

Wenn das zeitliche Mittel der von dem Elektromotor zu liefernden Antriebsleistung feststünde und der Verbrennungsmotor so ausgelegt oder ständig betrieben würde, daß er genau diese mittlere Antriebsleistung sowie zusätzlich die Umwandlungsverlust erbringt, wäre der Funktionsablauf einfach: Bei Leistungsabgabe des Elektromotors unterhalb der genannten mittleren Leistung geht der Leistungsüberschuß in den Speicher, und bei Leistungsabgabe des Elektromotors oberhalb der genannten mittleren Leistung wird die Leistungsdifferenz aus dem Speicher entnommen. In der Realität ist jedoch die mittlere Antriebsleistung keine für alle Betriebseinsatzbedingungen des Kraftfahrzeugs exakt bekannte, konstante Größe, sondern hängt insbesondere von dem jeweiligen Gewicht des Kraftfahrzeugs (kleinere oder größere Nutzlast vorhanden), den Fahrbedingungen (Schnellfahrt, Langsamfahrt, Stop-and-Go-Verkehr) etc. ab. Deshalb ist es sinnvoll, Steuerungsmöglichkeiten in Abhängigkeit von den aktuellen Betriebsbedingungen zu haben.

Nach einem ersten Aspekt der Erfindung ist eine Steuerung vorgesehen, die aufgrund einer Information über die aktuelle Ladesituation des Speichers und aufgrund einer Information über die aktuelle Leistungsabgabesituation des Elektromotors den Verbrennungsmotor auf höhere oder niedrigere Abgabeleistung steuert. Dies stellt eine gewisse Anpassung der Abgabeleistung des Verbrennungsmotors an den Leistungsbedarf des Kraftfahrzeugs dar, wobei der Speicher eine "zusätzliche Leistungsschwankungsreserve" darstellt. Die Steuerung kann im Sinne einer kontinuierlichen Anpassung der Abgabeleistung oder im Sinne einer diskontinuierlichen Anpassung mit mehreren Abgabeleistungspunkten ausgelegt sein.

Da angestrebt wird, daß der Verbrennungsmotor einen möglichst großen Teil seiner Betriebszeit an oder nahe bei seinem verbrauchsoptimalen Punkt läuft, ist die zuletzt beschriebene Steuerung so ausgelegt, daß - ggf. mit Ausnahme seltener Betriebssituationen - die Abgabeleistung des Verbrennungsmotors innerhalb der Grenzen bleibt, die durch Verbrennungsmotor-Abgabeleistung im verbrauchsoptimalen Punkt ± x% gegeben ist, wobei x% ein vorbestimmter Wert von höchstens 10% der Abgabeleistung im verbrauchsoptimalen Punkt ist Auf diese Weise bleibt der Verbrennungsmotor (nahezu) immer in der Nähe seines verbrauchsoptimalen Punktes, so daß sich ein Kraftstoffverbrauch des Verbrennungsmotors nur geringfügig oberhalb des Verbrauchsoptimums ergibt. Man kann allerdings vorsehen, daß die Steuerung in seltenen, extremen Betriebssituationen den Verbrennungsmotor auf noch niedrigere Abgabeleistung oder noch höhere Abgabeleistung bringt, beispielsweise wenn der Speicher trotz auf -x% gedrosselter Abgäbeleistung längere Zeit nahe seiner vollgeladenen Ladesituation ist oder wenn der Speicher trotz auf +x% gesteigerter Abgabeleistung des Verbrennungsmotors längere Zeit in der Gegend seiner minimalen Ladesituation ist

Nach einem zweiten Aspekt der Erfindung ist dem Generator eine elektronische Steuerung zugeordnet, die aufgrund einer Information über die aktuelle Ladesituation des Speichers und aufgrund einer Information über die aktuelle Leistungsabgabesituation des Elektromotors die Größe der von dem Generator abgegebenen elektrischen Leistung steuert.

Die Steuerung gemäß dem zweiten Aspekt der Erfindung ist - zum Zweck der erleichterten Verständnisses bewußt vereinfachend ausgedrückt - eine laufende Anpassung der vom Generator erzeugten bzw. abgezogenen elektrische Leistung an die Leistungsabgabesituation des Elektromotors, wobei der Speicher eine zusätzliche "Leistungsschwankungsreserve" darstellt.

Die Steuerung der Größe der von dem Generator abgegebenen elektrischen Leistung kann insbesondere durch Ausbildung eines im Generator nachgeschalteten Gleichrichters als gesteuerter Gleichrichter verwirklicht sein, der die vom Generator erzeugten Wechselspannungswellen anschneidet, d.h. nur Teilwellen gleichrichtet. Bevorzugt ist dabei jedoch eine elektronische Steuerung mit umfänglicherer Funktion, die z.B. nach dem Taktungsprinzip oder dem Phasenanschnittprinzip wahlweise größere oder kleinere elektrische Leistung von dem Generator abzieht. Geeignete elektronische Steuerungen hierfür sind an sich bekannt, so daß sich die Beschreibung weiterer Einzelheiten in diesem Zusammenhang erübrigt Durch die Steuerung des Generators ändert sich die Leistung/Drehzahl-Kennlinie des Generators im Vergleich zur Situation ohne diese Steuerung. Es ist normalerweise günstig, die Abgabeleistung des Verbrennungsmotors mindestens im wesentlichen der jeweils von dem Generator abgegebenen elektrischen Leistung anzupassen. Einrichtungen zur Anpassung der Abgabeleistung eines Verbrennungsmotors an Leistungsanforderungen, beispielsweise ohne wesentliche Drehzahländerung, sind an sich bekannt und brauchen deshalb hier nicht genauer beschrieben zu werden.

Bei dem zweiten Aspekt der Erfindung und bei einer bevorzugten Ausgestaltung des ersten Aspekts der Erfindung ist dem Verbrennungsmotor eine, vorzugsweise elektronische, Steuerung zugeordnet, die für die jeweils erforderliche Leistung des Verbrennungsmotors eine Drehzaht/Drehmoment-Kombination des Verbrennungsmotors wählt, die unter dem Gesichtspunkt des Kraftstoffverbrauchs und/oder dem Gesichtspunkt der Schadstoffemission des Verbrennungsmotors möglichst günstig ist. Die Ausdrucksweise "und/oder" soll nicht bedeuten, daß zwingend sowohl der Gesichtspunkt möglichst günstigen Kraftstoffverbrauchs als auch der Gesichtspunkt möglichst geringer Schadstoffemission herangezogen wird. Es ist vielmehr möglich, nur den einen dieser beiden Gesichtspunkte, nur den anderen dieser beiden Gesichtspunkte oder beide Gesichtspunkte zu berücksichtigen. Es ist ferner möglich, auch noch den einen oder anderen, weiteren Gesichtspunkt zu berücksichtigen, beispielsweise Betriebszustand des Verbrennungsmotors, bei dem der Ruß in einem Abgas-Rußfilter besonders effektiv abgebrannt wird. Diese Steuerung kann auch mit der weiter vorn beschriebenen Steuerung des Generators zusammengefaßt sein.

In der Praxis kann diese Steuerung so aussehen, daß das Verbrauchskennfeld des Verbrennungsmotors in einem Speicher gespeichert ist und daß die Steuerung bei Abforderung einer bestimmten Leistung des Verbrennungsmotors aus dem Kennfeld eine Drehzahl/Drehmoment-Kombination auswählt, die für diese Abgabeleistung einen möglichst geringen Kraftstoffverbrauch ergibt. Die Ausbildung kann ferner so sein, daß die Steuerung auch die Kennlinie des Generators berücksichtigt, weil mit sich ändernder Drehzahl der Verbrennungsmotor-Generator-Gruppe sich auch die dem Generator maximal entnehmbare elektrische Leistung ändert.

Bei dem erfindungsgemäßen Kraftfahrzeug handelt es sich vorzugsweise um einen Omnibus zur Personenbeförderung, in erster Linie um einen zur städtischen Personenbeförderung eingesetzten Omnibus. Aber auch Lastkraftwagen, insbesonder eingesetzt im innerstädtischen Guttransport, können erfindungsmäß ausgebildet sein. Als Verbrennungsmotor ist vorzugsweise ein Dieselmotor vorgesehen; aber auch ein Ottomotor oder andere Verbrennungsmotoren sind möglich. Bei dem Generator und/oder dem Speicher und/oder dem Elektromotor handelt es sich vorzugsweise um Aggregate, die mit hochkoerzitiven Dauermagneten ausgestattet und kommutatorlos elektronisch gesteuert sind. Es ist möglich, das Kraftfahrzeug mit mehr als einem Antriebs-Elektromotor auszustatten, beispielsweise mehreren Elektromotoren für mehrere Achsen oder mehreren Elektromotoren, von denen jeder nur auf ein Rad arbeitet.

Es ist möglich, bei jeder der beschriebenen Steuerungen die Auslegung so zu machen, bei Überschreiten eines Schwellenwerts der (abgeforderten) Leistungsabgabe des Elektromotors grundsätzlich den Generator und/oder den Verbrennungsmotor auf volle bzw. höhere Abgabeleistung zu steuern, ohne abzuwarten, bis sich die hohe Leistungsabgabe des Elektromotors in einem wesentlichen Absinken der Ladesituation des Speichers äußert.

Durch die elektrische Verbindung des Generators, des Speichers und des Elektromotors ist die grundlegende Systemfunktion derart, daß elektrischer Leistungsüberschuß im System für ein Laden des Speichers genutzt wird und daß elektrischer Leistungsmangel in dem System zu einem Entladen des Speichers führt.

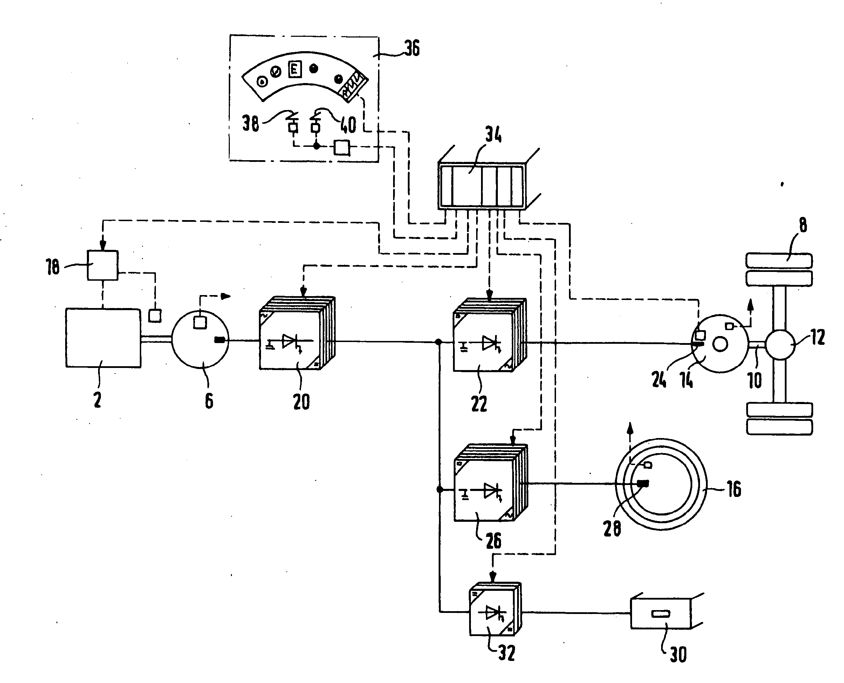

Die Erfindung und Ausgestaltungen der Erfindung werden nachfolgend anhand eines bevorzugten Ausführungsbeispiels noch näher erläutert. Die einzige Zeichnungsfigur zeigt, hauptsächlich in Form eines Blockdiagramms, die "elektrische Seite" des Kraftfahrzeugs, wobei die mehr mechanischen Komponenten zusätzlich schematisiert angedeutet sind.

In dem Fahrzeug sind ein Dieselmotor 2, ein direkt mit dem Dieselmotor 2 gekoppelter Stromgenerator 6, ein auf die Räder 8 einer Achse über eine Welle 10 und ein Differentialgetriebe 12 arbeitender Antriebs-Elektromotor 14, und ein Schwungrad-Speicher 16 eingebaut.

Dem Verbrennungsmotor 2 ist eine Regeleinheit 18 bzw. Steuereinheit zum Steuern von Drehzahl und/oder Drehmoment des Verbrennungsmotors 2 zugeordnet. Dem Generator 6 ist eine elektronische Entnahmestrom-Steuereinheit 20 zugeordnet. Dem Elektromotor 14 ist eine elektronische Steuereinheit 22 zugeordnet, welche die Spulen 24 des Elektromotors 14 zeitrichtig und vorzeichenrichtig mit elektrischem Strom beaufschlagt. Dem Speicher 16 ist eine elektronische Steuereinheit 26 zugeordnet, welche beim Laden des Speichers 16 dessen Spulen 28 zeitrichtig und vorzeichenrichtig elektrischen Strom zuführt und welche bei Entladen des Speichers 16 den Strom von diesem zeitrichtig und vorzeichenrichtig entnimmt und gleichrichtet. Außerdem sind ein oder mehrere Bremswiderstände 30 vorgesehen, der bzw. denen eine elektronische Steuereinheit 32 zugeordnet ist. Die Steuereinheit 20 ist ausgangsseitig und die Steuereinheiten 22, 26, 32 sind eingangsseitig an einen Gleichspannungszwischenkreis angeschlossen. Die Steuereinheiten 20, 22, 26, im Fall mehrerer Bremswiderstände 30 auch die Steuereinheit 32, sind als multiple Steuereinheiten ausgebildet, bei denen die Gesamtfunktion jeweils auf mehrere parallel arbeitende Untersteuereinheiten aufgeteilt ist, von denen beispielsweise im Fall der Steuereinheiten 22 und 26 jede Untersteuereinheit nur einen Teil der Spulen 24 bzw. 28 steuert. Der Elektromotor 14 und der Speicher 16 ist jeweils mit mindestens einem nicht eingezeichneten Drehstellungssensor ausgestattet, der die Information für das zeitrichtige und vorzeichenrichtige Zuführen von Strompulsen liefert.

Ferner sind eine ebenfalls multiple Prozessor-Steuereinheit 34 und eine Bedieneinheit 36 eingezeichnet. Bei der Bedieneinheit 36 sind insbesondere ein Fahrpedal 38 und ein Bremspedal 40 angedeutet. Die Bedieneinheit 36 ist mit der Prozessor-Steuereinheit 34 verbunden. Die Prozessor-Steuereinheit 34 ist mit den Steuereinheiten 18, 20, 22, 26, 32 verbunden. Der Generator 6, der Elektromotor 14 und der.Speicher 16 sind mit der Prozessor-Steuereinheit 34 und mit den zugeordneten Steuereinheiten 20, 22, 26 verbunden, wie mit kurzen Pfeilen angedeutet.

Wenn beispielsweise das Fahrpedal 38 stärker niedergedrückt wird, gibt die Prozessor-Steuereinheit 34 der Steuereinheit 22 den Befehl "mehr Leistung an den Elektromotor 14". Eine Information über die somit erhöhte Leistungsabgabesituation des Elektromotors 14 wird an die Steuereinheit 20 gegeben, die infolgedessen mehr elektrische Leistung von dem Generator 6 in den Gleichspannungszwischenkreis 34 abführt, wo sie für den erhöhten Leistungsbedarf des Elektromotors 14 zur Verfügung steht. Falls dann noch im Gleichspannungskreis ein Mangel elektrischer Leistung besteht, wird mittels der Steuereinheit 26 elektrische Leistung aus dem Speicher 16 abgezogen, dessen Drehzahl daraufhin sinkt. Falls im Gleichspannungszwischenkreis 34 ein Überschuß elektrischer Leistung besteht, wird dieser über die Steuereinheit 26 an den Speicher 16 gegeben, dessen Drehzahl sich darauf erhöht. Durch die Steuereinheit 18 wird die als mechanische Leistung abgegebene Leistung des Verbrennungsmotors 2 der durch die Steuereinheit 20 vorgegebenen Leistungssituation angepaßt.

Nach einer Variante ist die Steuereinheit 20 keine Steuereinheit, welche die Stromentnahme von dem Generator 6 steuert, sondern ein ungesteuerter Gleichrichter. In diesem Fall übernimmt allein die Steuereinheit 18 die Anpassung der Leistung des Verbrennungsmotors 2.

Beispielsweise in der Prozessor-Steuereinheit 34 ist das Drehmoment/Drehzahl-Verbrauchskennfeld des Verbrennungsmotors 2 elektronisch gespeichert. Bei einer Anpassung der Abgabeleistung des Verbrennungsmotors 2 wird aufgrund dieses Kennfelds eine Drehzahl/Drehmoment-Komination mit optimal geringem Kraftstoffverbrauch des Verbrennungsmotors 2, ggf. unter Berücksichtigung möglichst geringer Schadstoffemission des Verbrennungsmotors 2, ausgewählt.

Mittels der Prozessor-Steuereinheit 34 in Zusammenwirkung mit den Steuereinheiten 26, 32 wird auch gesteuert, daß beim Verzögern des Kraftfahrzeugs (Bremspedal 40 mehr oder weniger stark niedergetreten) elektrische Leistung aus dem Elektromotor 24 in den Gleichspannungszwischenkreis 34 und von dort in den Speicher 16, ggf. zusätzlich oder bei vollständig geladenem Speicher 16 ausschließlich in die Bremswiderstände 30 fließt.

Die Steuereinheiten 20, 22 und 26 sind vorzugsweise Steuereinheiten, deren Untersteuereinheiten jeweils als Vierquadrantensteller ausgebildet sind. Derartige Vierquadrantensteller und Steuereinheiten sind bekannt, so daß weitere Einzelheiten hier nicht beschrieben werden müssen. Das gleiche gilt für die Aggregate Generator 6, Elektromotor 14, Speicher 16 sowie für die Steuereinheit 32. Die Ausbildung der Bedieneinheit 36 und der Prozessor-Steuereinheit 34 ist dem Fachmann aufgrund seines Fachwissens möglich, nachdem er von der vorstehend beschriebenen Erfindung Kenntnis genommen hat.

Die Steuereinheit 20 und der Generator 6 können so ausgebildet sein, daß der Generator 6 als Anlasser für den Verbrennungsmotor 2 betrieben werden kann. Der Rotor des Generators kann unmittelbar auf der (verlängerten) Kurbelwelle des Verbrennungsmotors vorgesehen sein.

## Patentansprüche

1. Kraftfahrzeug, das
- einen Verbrennungsmotor (2), der eine mittlere Antriebsleistung für das Kraftfahrzeug liefert,
- einen von dem Verbrennungsmotor (2) antreibbaren Generator (6) zur Stromerzeugung,
- und einen elektrisch ladbaren und entladbaren Schwungradspeicher (16) aufweist,
- wobei der allein elektromotorisch ausgebildete Fahrzeugantrieb mindestens einen Elektromotor (14) aufweist,
- und wobei der Generator (6), der Speicher (16) und der Elektromotor (14) elektrisch miteinander verbunden sind und dem Speicher (16) die Leistungsdifferenz zwischen dem Generator (6) und dem Elektromotor (14) zugeführt bzw. entnommen wird,
**dadurch gekennzeichnet,**
**daß** eine Steuerung (18,34) vorgesehen ist, die aufgrund einer Information über die aktuelle Ladesituation des Speichers (16) und aufgrund einer Information über die aktuelle Leistungsabgabesituation des Elektromotors (14) den Verbrennungsmotor (2) auf höhere oder niedrigere Abgabeleistung steuert;
und **daß** die Steuerung (18,34) so ausgelegt ist, daß - ggf. mit Ausnahme seltener Betriebssituationen - die Abgabeleistung des Verbrennungsmotors (2) innerhalb der Grenzen bleibt, die durch Verbrennungsmotor-Abgabeleistung im verbrauchsoptimalen Punkt ± x% gegeben ist, wobei x% ein vorbestimmter Wert von höchstens 10 % der Abgabeleistung im verbrauchsoptimalen Punkt ist

2. Kraftfahrzeug nach Anspruch 1,
**dadurch gekennzeichnet,**
**daß** dem Verbrennungsmotor (2) eine Steuerung (18) zugeordnet ist, die für die jeweilige Leistung des Verbrennungsmotors (2) eine Drehzahl/Drehmoment-Kombination des Verbrennungsmotors (2) wählt, die unter dem Gesichtspunkt des Kraftstoffverbrauchs und/oder dem Gesichtspunkt der Schadstoffemission des Verbrennungsmotors (2) möglichst günstig ist.

3. Kraftfahrzeug, das
- einen Verbrennungsmotor (2), der eine mittlere Antriebsleistung für das Kraftfahrzeug liefert,
- einen von dem Verbrennungsmotor (2) antreibbaren Generator (6) zur Stromerzeugung,
- und einen elektrisch ladbaren und entladbaren Schwungradspeicher (16) aufweist,
- wobei der allein elektromotorisch ausgebildete Fahrzeugantrieb mindestens einen Elektromotor (14) aufweist,
- und wobei der Generator (6), der Speicher (16) und der Elektromotor (14) elektrisch miteinander verbunden sind und dem Speicher (16) die Leistungsdifferenz zwischen dem Generator (6) und dem Elektromotor (14) zugeführt bzw. entnommen wird.
**dadurch gekennzeichnet,**
**daß** dem Generator (6) eine elektronische Steuerung (20) zugeordnet ist, die aufgrund einer information über die aktuelle Ladesituation des Speichers (16) und aufgrund einer Information über die aktuelle Leistungsabgabesituation des Elektromotors (14) die Größe der von dem Generator (6) abgegebenen elektrischen Leistung steuert; und daß dem Verbrennungsmotor (2) eine Steuerung (18) zugeordnet ist, die für die dem zufolge erforderliche jeweilige Leistung des Verbrennungsmotors (2) eine Drehzahl/Drehmoment-Kombination des Verbrennungsmotors (2) wählt, die unter dem Gesichtspunkt des Kraftstoffverbrauchs und/oder dem Gesichtspunkt der Schadstoffemission des Verbrennungsmotors (2) möglichst günstig ist.

4. Kraftfahrzeug nach einem der Ansprüche 1 bis 3,
**dadurch gekennzeichnet,**
**daß** mindestens ein Bremswiderstand (30) vorgesehen ist, in dem beim Verzögern des Kraftfahrzeugs elektrische Leistung, die in dem jetzt als Generator arbeitenden Elektromotor (14) erzeugt wird und nicht für den Speicher (16) nutzbar ist, in Warme umgewandelt wird.

## Claims

1. A motor vehicle comprising
- an internal combustion engine (2) delivering an average driving power for the motor vehicle,
- a generator (6) for producing electric current, which is adapted to be driven by the internal combustion engine (2), and
- a flywheel storage (16) adapted to be electrically charged and discharged,
- with the vehicle drive system, which is designed for electric-motor driving only, having at least one electric motor (14),
- and the generator (6), the storage (16) and the electric motor (14) being electrically connected to each other, and the power difference between generator (6) and electric motor (14) being supplied to and withdrawn from the storage (16), respectively,
**characterized in**
**that** a control system (18, 34) is provided which, on the basis of information on the current charging situation of the storage (16) and information on the current power delivery situation of the electric motor (14), controls the internal combustion engine (2) to have a higher or a lower delivery power;
and in that the control system (18, 34) is designed such that - possibly with the exception of rare operating situations - the delivery power of the internal combustion engine (2) remains within the limits established by the internal combustion engine delivery power at the point of optimum consumption ± x%, with x% being a predetermined value of at the most 10 % of the delivery power at the point of optimum consumption.

2. A motor vehicle according to claim 1,
**characterized in that** the internal combustion engine (2) has a control system (18) associated therewith which, for the particular power of the internal combustion engine (2), selects a speed/torque combination of the internal combustion engine (2) which is as favourable as possible under the aspect of fuel consumption and/or the aspect of pollutant emission of the internal combustion engine (2).

3. A motor vehicle comprising
- an internal combustion engine (2) delivering an average driving power for the motor vehicle,
- a generator (6) for producing electric current, which is adapted to be driven by the internal combustion engine (2), and
- a flywheel storage (16) adapted to be electrically charged and discharged,
- with the vehicle drive system, which is designed for electric-motor driving only, having at least one electric motor (14),
- the generator (6), the storage (16) and the electric motor (14) being electrically connected to each other, and the power difference between generator (6) and electric motor (14) being supplied to and withdrawn from the storage (16), respectively,
**characterized in**
**that** the generator (6) has an electronic control system (20) associated therewith which, on the basis of information on the current charging situation of the storage (16) and information on the current power delivery situation of the electric motor (14), controls the amount of electrical power delivered by the generator (6);
and in that the internal combustion engine (2) has a control system (18) associated therewith which, for the accordingly required particular power of the internal combustion engine (2), selects a speed/torque combination of the internal combustion engine (2) which is as favourable as possible under the aspect of fuel consumption and/or the aspect of pollutant emission of the internal combustion engine (2).

4. A motor vehicle according to any one of claims 1 to 3,
**characterized in that** at least one braking resistor (30) is provided in which, upon deceleration of the motor vehicle, electrical power that is produced in the electric motor (14) now operating as a generator and that cannot be used for the storage (18), is converted into heat.

## Revendications

1. Véhicule automobile présentant
- un moteur à combustion (2) délivrant une puissance motrice moyenne pour le véhicule,
- un générateur (6) pouvant être entraîné par le moteur à combustion (2) pour la production d'électricité,
- et un réservoir d'énergie à volant d'inertie (16) pouvant être chargé et déchargé électriquement,
- l'entraînement du véhicule, seulement électromoteur, présentant au moins un moteur électrique (14) pour la propulsion du véhicule,
- et le générateur (6), le réservoir (16) et le moteur électrique (14) étant reliés électriquement les uns aux autres et la différence de puissance entre le générateur (6) et le moteur électrique (14) pouvant être transmise au, ou prélevée du réservoir (16),
**caractérisé en ce**
**qu'**il comprend une commande (18, 34) qui impose au moteur à combustion (2), sur la base d'une information concernant l'état actuel de charge du réservoir (16) et sur la base d'une information concernant la puissance délivrée actuelle par le moteur électrique (14), une puissance délivrée plus élevée ou plus basse ; et en ce que la commande (18, 34) est conçue de telle façon que, le cas échéant à l'exception de conditions de fonctionnement peu fréquentes, la puissance délivrée par le moteur à combustion (2) demeure à l'intérieur des limites qui sont données par la puissance délivrée par le moteur au point de consommation optimale ± x%, x% étant une valeur prédéterminée d'au plus 10% de la puissance délivrée au point de consommation optimale.

2. Véhicule automobile selon la revendication 1,
**caractérisé en ce**
**qu'**une commande (18) est associée au moteur à combustion (2), qui choisit pour chaque puissance du moteur à combustion (2) une combinaison vitesse de rotation/couple moteur du moteur à combustion (2) qui est la plus avantageuse possible du point de vue de la consommation de carburant et/ou du point de vue de l'émission de produits nocifs par le moteur à combustion (2).

3. Véhicule automobile présentant
- un moteur à combustion (2) délivrant une puissance motrice moyenne pour le véhicule,
- un générateur (6) pouvant être entraîné par le moteur à combustion (2) pour la production d'électricité,
- et un réservoir d'énergie à volant d'inertie (16) pouvant être chargé et déchargé électriquement,
- l'entraînement du véhicule, seulement électromoteur, présentant au moins un moteur électrique (14) pour la propulsion du véhicule,
- et le générateur (6), le réservoir (16) et le moteur électrique (14) étant reliés électriquement les uns aux autres et la différence de puissance entre le générateur (6) et le moteur électrique (14) pouvant être transmise au, ou prélevée du réservoir (16),
**caractérisé en ce**
**qu'**une commande électronique (20) est associée au générateur (6), qui impose au générateur (6), sur la base d'une information concernant l'état actuel de charge du réservoir (16) et sur la base d'une information concernant la puissance délivrée actuelle par le moteur électrique (14), la valeur de la puissance électrique délivrée par le générateur (6) ; et en ce qu'une commande (18) est associée au moteur à combustion (2), qui choisit pour chaque puissance, de ce fait nécessaire, du moteur à combustion (2) une combinaison vitesse de rotation/couple moteur du moteur à combustion (2) qui est la plus avantageuse possible du point de vue de la consommation de carburant et/ou du point de vue de l'émission de produits nocifs par le moteur à combustion (2).

4. Véhicule automobile selon l'une quelconque des revendications 1 à 3,
**caractérisé en ce**
**qu'**il comprend au moins une résistance de freinage (30) dans laquelle la puissance électrique qui est générée lors d'une décélération du véhicule automobile dans le moteur électrique (14) travaillant à cet instant comme générateur, et qui n'est pas utilisable pour le réservoir (16) est convertie en chaleur.
